# EUROPEAN PATENT APPLICATION

(11) **EP 4 718 299 A1**
(43) Date of publication of application: **01.04.2026**
(21) Application number: 25202836.0
(22) Date of filing: 17.09.2025
(51) Int. Cl.: G06F 21/54, G06F 21/55, G06F 21/60, G06F 9/48, G06F 9/50, H04L 9/40, H04L 67/00

(54) **AN APPARATUS FOR MIGRATING A WORKLOAD, AN APPARATUS AND A METHOD**

(30) Priority: 25.09.2024 US 202418895521
(71) Applicant: INTEL Corporation, Santa Clara, CA 95054 (US)
(72) Inventor: SMITH, Ned M., Beaverton, 97006 (US); SCARLATA, Vincent R., Beaverton, 97006 (US); BEANEY Jr., James, Raleigh, 27612 (US)
(74) Representative: 2SPL Patentanwälte PartG mbB

(57) **Abstract**

It is provided an apparatus comprising interface circuitry, machine-readable instructions, and processing circuitry to execute the machine-readable instructions. The machine-readable instructions include instructions to obtain a migration history log from a first confidential computing environment executing a workload. The migration history log comprising data about one or more performed migrations of the workload. The machine-readable instructions further include instructions to obtain an attestation evidence collection associated with the workload. The attestation evidence collection associated with the workload comprising one or more attestation evidence associated with the workload. The machine-readable instructions further include instructions to obtain a migration image of the workload from the first confidential computing environment. The machine-readable instructions further include instructions to transmit at least one of the migration image, the attestation evidence collection and the migration history log to a second confidential computing environment

## Description

### Background

In the field of Confidential Computing Environments (CCEs), organizations are increasingly relying on cloud services and distributed systems to manage their workloads. As this reliance grows, it becomes more important to ensure the integrity, security, and continuity of workloads during migration processes. Maintaining the confidentiality and integrity of data may be particularly challenging when workloads are moved across different physical or virtual infrastructures. Therefore, there may be a desire to improve the migration of workloads

### Brief description of the Figures

Some examples of apparatuses and/or methods will be described in the following by way of example only, and with reference to the accompanying figures, in which
Fig. 1 illustrates a block diagram of an example of an apparatus for migrating a workload;
Fig. 2 illustrates a block diagram of an example of a second apparatus;
Fig. 3 illustrates a block diagram of an example of a second apparatus;
Fig. 4 illustrates a system for migrating a workload;
Fig. 5 illustrates a flowchart of an example of a method;
Fig. 6 illustrates an example of a system for migrating a workload;
Fig. 7 illustrates an example of a flowchart of a live migration of a workload by the system of Fig. 6; and
Fig. 8 illustrates a migration agent architecture for migration of a workload.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

Workloads which are deployed in a CCE may be migrated (locally or remotely) for several reasons such as resilience, availability, or manageability events. CCE migration may involve identifying the source CCE and a destination CCE to receive the workload. Live migration may preserve the workloads working set (state) along with-it, integrity state that includes attestation evidence and possibly a history of previous migration events. A migration service, such as a migration-as-a-service, for example provided by a migration server, may expose a web interface for receiving CCE migration requests, creating a migratable image (from the source CCE), and applying the migration on destination CCE. The migration service may ensure the migrated workload can be halted, migrated, and restarted without impacting the workload execution status. This may include migrating and renewing network connections and various commands buffers in use across a network connected workload. Live migration of CCE hosted workloads may expand the definition of trust to include resiliency and availability as part a broader Trust-as-a-Service offering. For example, Intel^{®} CCE technologies (such as SGX/TDX) with cloud edge computing may provide building blocks that may be leveraged by this technique.

In previous approaches Internet Engineering Task Force Trusted Execution Environment Provisioning (IETF TEEP) working group defined CCE (for example TEE) provisioning protocols. However, they did not handle CCE migration. This is also described in the specification "Trusted Execution Environment Provisioning (TEEP) Protocol (ietf-teep-protocol-19)", by Hannes Tschofenig and Mingliang Pei and Dave Wheeler and Dave Thaler and Akira Tsukamoto, published by the Internet Engineering Task Force on May 19, 2024. TEEP technology may have not been integrated with live CCE migration capabilities. They may not comprehend live migration.

The proposed technique may provide live migration of CCEs by using CCE attestation which describes the integrity of a memory resident workload instead of a disk resident, boot-time relevant measurement. Migrated workloads integrity provenance may be preserved across migrations to better track and assess integrity posture of the workload. Further, the proposed technique of live migration may enable workloads on resource constrained CCEs to seamlessly move to resource rich CCEs. Further, the proposed technique minimizes a workload down time and reinitialization and/or setup sequences. Further, the proposed technique provides an integration of emerging industry standards for attestation evidence and thereby enables a broader adoption of CCE workload live migration.

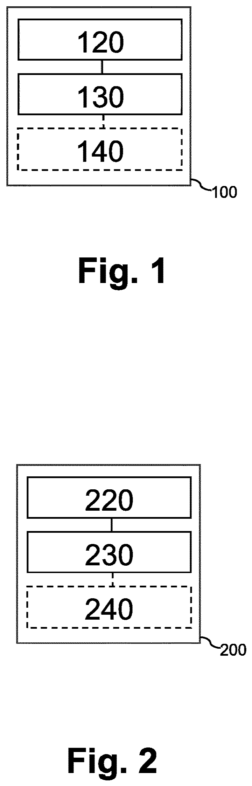

**Fig. 1** illustrates a block diagram of an example of an apparatus for migrating a workload 100 or device migrating a workload 100. The apparatus migrating a workload 100 comprises circuitry that is configured to provide the functionality of the apparatus migrating a workload 100. For example, the apparatus migrating a workload 100 of Fig. 1 comprises interface circuitry 120, processing circuitry 130 and (optional) storage circuitry 140. For example, the processing circuitry 130 may be coupled with the interface circuitry 120 and optionally with the storage circuitry 140.

For example, the processing circuitry 130 may be configured to provide the functionality of the apparatus 100, in conjunction with the interface circuitry 120. For example, the inter-face circuitry 120 is configured to exchange information, e.g., with other components inside or outside the apparatus 100 and the storage circuitry 140. Likewise, the device 100 may comprise means that is/are configured to provide the functionality of the device 100.

The components of the device 100 are defined as component means, which may correspond to, or implemented by, the respective structural components of the apparatus 100. For ex-ample, the device 100 of Fig. 1 comprises means for processing 130, which may correspond to or be implemented by the processing circuitry 130, means for communicating 120, which may correspond to or be implemented by the interface circuitry 120, and (optional) means for storing information 140, which may correspond to or be implemented by the storage circuitry 140. In the following, the functionality of the device 100 is illustrated with respect to the apparatus 100. Features described in connection with the apparatus 100 may thus likewise be applied to the corresponding device 100.

In general, the functionality of the processing circuitry 130 or means for processing 130 may be implemented by the processing circuitry 130 or means for processing 130 executing machine-readable instructions. Accordingly, any feature ascribed to the processing circuitry 130 or means for processing 130 may be defined by one or more instructions of a plurality of machine-readable instructions. The apparatus 100 or device 100 may comprise the ma-chine-readable instructions, e.g., within the storage circuitry 140 or means for storing in-formation 140.

The interface circuitry 120 or means for communicating 120 may correspond to one or more inputs and/or outputs for receiving and/or transmitting information, which may be in digital (bit) values according to a specified code, within a module, between modules or be-tween modules of different entities. For example, the interface circuitry 120 or means for communicating 120 may comprise circuitry configured to receive and/or transmit information.

For example, the processing circuitry 130 or means for processing 130 may be implemented using one or more processing units, one or more processing devices, any means for processing, such as a processor, a computer or a programmable hardware component being operable with accordingly adapted software. In other words, the described function of the processing circuitry 130 or means for processing 130 may as well be implemented in software, which is then executed on one or more programmable hardware components. Such hardware components may comprise a general-purpose processor, a Digital Signal Processor (DSP), a micro-controller, etc.

For example, the storage circuitry 140 or means for storing information 140 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage. For example, the storage circuitry 140 may store a (UEFI) BIOS.

The processing circuitry 130 is configured to obtain a migration history log from a first CCE executing a workload. The migration history log comprises data about one or more performed migrations of a workload. The workload is executed in the first CCE. The processing circuitry 130 is further configured to obtain an attestation evidence collection associated with the workload. The attestation evidence collection associated with the workload comprises one or more prior attestation evidence associated with the workload. The attestation evidence collection comprises one or more prior attestation evidence of the workload. The processing circuitry 130 is further configured to obtain a migration image of the workload from the first CCE. The processing circuitry 130 is further configured to transmit at least one of the migration image, the attestation evidence collection and the migration history log to a second CCE.

In some examples, the first and the second CCE may be run on the apparatus 100. In another example, one of the first or the second CCE may run on apparatus 100 and the and one of the first or the second CCE may run on another apparatus (for example the second apparatus 200 or third apparatus 300).

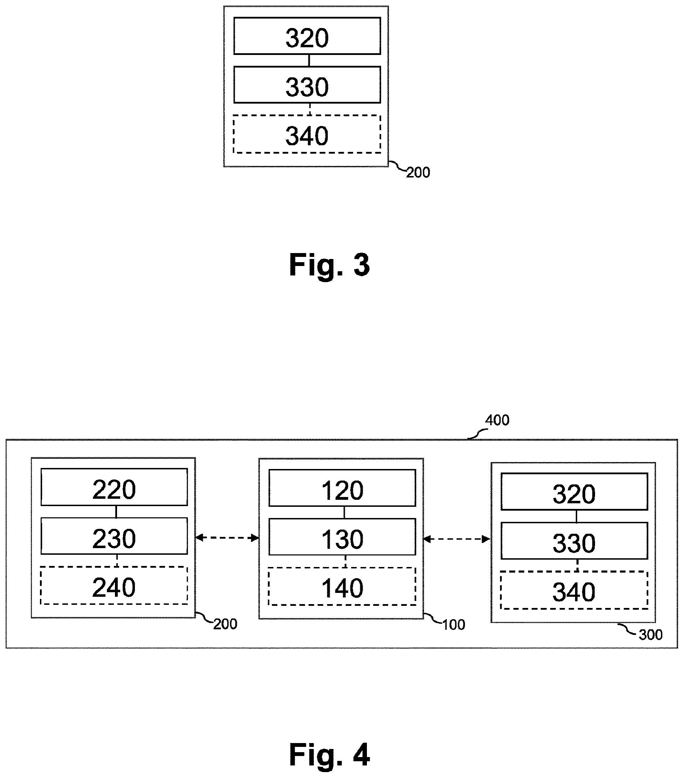

For example, the first CCE is executing on a first host, for example the second apparatus 200 (see Fig. 2 below). For example, the second CCE is executing on a second host, for example, the third apparatus 300 (see Fig. 3 below). For example, the processing circuitry 130 may communicate with the first CCE and the second CCE via the interface circuitry 120. The first host and the second host may be different from each other. The first host and the second host may be physically separated. A migration of a workload between two CCEs which are hosted by the two different hosts may be referred to as remote migration. A migration of a workload between two CCEs which are hosted at the same host may be referred to as local migration. A migration of a workload between two execution environments of the same CCE may be also referred to as local migration. The migration of the workload described herein, may be a local or a remote migration.

In some examples, the processing circuitry 130 is further configured to receive a request of a migration of the workload. In some examples, the processing circuitry 130 is further configured to receive a request of a live migration of the workload. The request to live migrate the workload from the first CCE to the second CCE may be initiated by an orchestrator responsible for executing the workload. For example, the orchestrator may monitor the workload's performance and may detect sub-optimal performance conditions such as high resource utilization, latency issues, and/or potential security risks. The orchestrator may automatically generate the live-migration request, or the live-migration request may be initiated manually by an operator of the workload responding to specific needs, such as balancing loads, maintaining service levels, or conducting maintenance.

Live migration may of the workload from the first CCE to the second CCE may refer to a migration of the workload during the lifecycle of the workload. That is the workload may be migrated from the first CCE to the second CCE with only being paused but without a full shutdown or restart from scratch of the workload, thereby maintaining continuity of service

In some examples, the request of the live migration of the workload is received by the processing circuitry 130 via a web interface. For example, the web interface may be a part of the interface circuitry 120, or it may be a software interface application executed by the processing circuitry 130, or it may be a combination of the interface circuitry 120 and a software interface application. The web interface provided by the apparatus 100 may allow a user, for example the orchestrator, or a CCE to initiate the live migration request of the workload. The user or CCE may access the web interface through a standard web browser over a network, for example the internet or a local intranet. The web interface may act as a gateway for the user or CCE to interact with the apparatus 100, sending migration requests, viewing status updates, and/or managing the migration process.

A CCE architecture may comprise a combination of specialized hardware and software components designed to protect data and computations from unauthorized access and tampering within a computer system. The CCE architecture may provide secure processing circuitry, which is responsible for executing sensitive workloads in an isolated environment. Additionally, the CCE architecture may provide secure memory, such as a protected region of the computer system's RAM, where sensitive data can be stored during computation. To further safeguard this data, the CCE architecture may provide memory encryption, ensuring that the contents of the system memory are protected even if physical access to the memory is obtained. For example, the CCE architecture may support I/O isolation and secure input/output operations, preventing data leakage during communication between the processing circuitry and peripheral devices. In some examples, the CCE architecture may provide secure storage capabilities of the computer system, such as a secure partition within the system's main storage, dedicated to storing cryptographic keys, sensitive configuration data. This secure storage ensures that critical data remains protected even when at rest. In some examples, the CCE may also comprise separate secure storage components, such as a tamper-resistant storage chip, like an integrity measurement register, to securely store measurements of the CCE and/or critical data associated with the CCE's operation. A host may generate one or more instances of CCEs based on the CCE architecture. The instances of the CCE architecture may be referred to as a CCE (also referred to as a Trusted Execution Environment). The CCE uses its components to enable the secure and isolated execution of workloads. A workload executed in the CCE may include a set of applications, tasks, or processes that are actively managed and protected by these secure hardware components. This includes computational activities that utilize the CCE's resources, including CPU, memory, and storage, to perform their operations. Such activities may involve running applications, processing sensitive data, performing calculations, and managing tasks that require a high level of security and confidentiality. The CCE ensures that these workloads are protected from unauthorized access and tampering by leveraging hardware-based security features and cryptographic measures, thereby maintaining the integrity and confidentiality of the data and processes throughout their execution.

A measurement of the CCE or a part of the CCE may represent the state of a component, such as a hardware, software or firmware component involved with the CCE at a specific point in time. A measurement may be a digest, such as a cryptographic hash, that uniquely reflects the state of the CCE and/or one or more of its components at that specific point in time. A measurement of a software (including firmware) component may comprise a cryptographic hash of the software. This hash may include the binary executable code, configuration data, and/or initial state data of that software or software component. The hash is generated by reading the raw binary data of the system software components and processing it through a cryptographic hash function (e.g., SHA-256) to produce a fixed-size hash value that uniquely represents the exact state of the component at that point in time. For example, the measurement of a runtime image may include a cryptographic hash of the runtime image's in-memory representation.

The CCE may comprise one or more hierarchical layered environments, including the workload. Each of the one or more layered environments may be specifically designed to perform distinct computing functions within the CCE. These layered environments are hierarchically structured such that a lower layered environment may support and attest to the integrity of an environment above it, ensuring a continuous chain of trust throughout the CCE. For example, a lower layered environment may receive a measurement from the environment layered above and sign it with its private key. The one or more layered environments may be categorized into layers based on their functions within the CCE. The layers may be logically and/or hardware-separated based on their specific functions, roles, and responsibilities within the CCE, ensuring a structured and secure computing framework. For example, there may be one or more layers designed to perform foundational security functions, including the Root of Trust (RoT). The RoT may be a hardware-based security component that provides a secure and immutable trust anchor for the layers above. The foundational security provides the essential security mechanisms and trust anchors upon which the entire framework is built. The foundational security framework provides the base upon which the entire CCE's security relies. One example of a foundational security framework is the Device Identifier Composition Engine (DICE) specification. DICE is a hardware-based security mechanism that generates unique cryptographic identities and keys based on the initial measurement of a device's hardware and firmware state during boot. DICE comprises a process that derives cryptographic keys at each stage of the boot process. The keys derived based on DICE may be used to derive various cryptographic keys, including firmware keys and quoting keys, which create a chain of trust through layered identities and attestation. DICE may be defined in the specification "DICE Attestation Architecture" by the Trusted Computing Group, Version 1.1, Revision 0.18, January 6, 2024. Further, a trusted platform manager (also referred to as a Trusted Platform Module, or TPM) may be part of the CCE. The trusted platform manager may record measurements in an integrity register and manage cryptographic keys to sign measurements for internal verification. The trusted platform manager ensures that the system starts from a trusted state, forming the foundational security upon which the CCE operates.

Another environment within the CCE may be the quoting environment (QE), also known as the quoting agent, which is responsible for gathering, formatting, reformatting, and signing measurements and generating attestation evidence (also referred to as quotes) from other layered environments within the CCE. The QE may comprise modules responsible for handling cryptographic operations, such as formatting and signing the integrity measurements collected from higher layers. For instance, the QE may receive measurements from an execution environment and format or sign them with a cryptographic key to produce attestation evidence. This attestation evidence may be consolidated and structured in a way that can be verified by an external attestation verifier. For example, the CCE may comprise an execution environment (such as a tenant environment (TE)) and a service environment (such as a migration environment (ME)). The execution environment may be a secure, isolated execution space dedicated to running a tenant's (user's) applications, data, and workloads.

In some examples, a measurement from a higher layered environment may be signed by a lower layered environment to maintain a continuous chain of trust. This may be referred to as a trust dependency between the higher layered environment and the lower layered environment. For example, the measurement of a higher layered environment is signed with the private key of a lower layered environment, and the public key of the private-public key pair of the higher layered environment may also be signed with the private key of the lower layered environment. This ensures that the public key, when used to verify the measurement, is authenticated by the lower layer's signature. A private-public key pair, also known as asymmetric cryptography or public-key cryptography, is a cryptographic tool used for secure communication and authentication. The private key is kept secret and is used to sign data, creating a digital signature that verifies the data's integrity and origin. The corresponding public key is shared openly and is used to verify the digital signature created by the private key, ensuring that the data has not been tampered with and confirming the identity of the sender. This pair enables secure data exchange and authentication without needing to share the private key, thus maintaining security.

In some examples, the first (and/or the second) CCE comprise at least one of the following layered environments: A foundational environment (RoT), a firmware environment, a trusted platform manager environment (which may manage the security of multiple CCEs), a quoting environment, a tenant environment and a migration environment. In some examples, the least one of the following trust dependencies applies: A signed measurement of the tenant environment has a trusted dependency on the quoting environment; a signed measurement of the quoting environment has a trust dependency on the trusted platform environment; a signed measurement of the trusted platform has a trust dependency on the package firmware environment; and a signed measurement of the firmware environment has a trust dependency on a root of trust of a processor executing the first CCE. For example, the RoT, as the lowest layer and part of the processing circuitry 130, may receive a measurement of the firmware. The RoT signs the measurement of the firmware with its private key and also signs the public key of the firmware. Next, the firmware environment receives a measurement of the trusted platform manager environment, signs it with its private key, and also signs the public key of the trusted platform manager. It may also include the previously signed measurement from the RoT. For example, this process may continue for further subsequent layers, for example up to the QE. The QE then receives measurements from higher layers, such as the TE and ME, and signs them with its private key. The corresponding public key is verified by the lower layers. Further, it may include signatures from lower layers which are attested down to the RoT as described above. This hierarchical signing process ensures that each layer's integrity is verifiable, creating a robust chain of trust throughout the CCE.

For example, a measurement associated with the workload may refer to a measurement of one or more components of the CCE (including the workload itself) that is currently or was in the past executing the workload during the lifecycle of the workload. For example, the measurement associated with the workload may be a measurement of any of the layered environments of the CCE currently/in the past executing the workload. For example, the measurement associated with the workload may be a measurement of the workload itself, that is it may capture the current/past state of the workload, including its code, data, and execution status. In some examples, the measurement associated with the workload may be a measurement of the runtime image comprising the workload. This measurement of the runtime image may capture the state of the workload, libraries, runtime environment, and bring-up code. For example, the measurement of the runtime image may be a measurement of the pre-load image or the post-load image. Thereby, the operational state at a point in time of the measurement of the measured components being executed within the CCE is accurately reflected. In some examples, the measurement associated with the workload may be a measurement of the execution environment of the CCE which is executing the workload (for example the tenant environment). The measurement of the execution environment of the CCE may comprise a cryptographic hash of the runtime image in conjunction with the environment's state.

Attestation evidence associated with the workload may be a set of data used to verify the integrity and security of integrity the CCE or parts of the CCE (including the workload itself) in a specific point in time during the lifecycle of the workload. In other words, the attestation evidence associated with the workload is used to verify the integrity and security of integrity the CCE or parts of the CCE that is executing the workload or has executed the workload in the past during the lifecycle of the workload. The attestation evidence associated with the workload may be used in an attestation process to provide verifiable proof to a verifier that the one or more CCEs and/or its components executing the workload during its lifecycle are secure, untampered with, and operating as expected, allowing the verifier to establish trust in the CCE's integrity and security status. In some examples the attestation evidence of the workload may comprise a measurement associated with the workload (as described above) and a signature of this measurement. The measurement associated with the workload may be signed with a private key to produce a digital signature, ensuring the integrity and authenticity of the measurement. The attestation evidence associated with the workload may comprise the measurement associated with the workload and the cryptographic signature of this measurement. Signing a measurement may comprise generating a digital signature by encrypting a digest of the measurement, such as a hash, with a private key, thereby ensuring the authenticity and integrity of the measurement.

For example, generating a digital signature may comprise creating a cryptographic hash of the measurement (the component's state) and then signing this hash with a private key to produce a digital signature, ensuring the integrity and authenticity of the measurement. The attestation evidence may be used in an attestation process to provide verifiable proof that the system's components are secure, untampered with, and operating as expected, allowing a verifier to establish trust in the system's integrity and security status.

In some examples, the attestation evidence associated with the workload may comprise at least one of the following: One or more measurements associated with the workload, the corresponding signatures of these measurements, corresponding public keys (where the corresponding private keys were used to sign the measurements), and the signatures of these public keys. Additionally, the attestation evidence associated with the workload may include configuration data, telemetry data, and/or inference data. Configuration data may comprise initial settings for the execution of the software image being measured, such as default operational states like tick counters and file descriptor states. Telemetry data may include operational metrics available to the running image, such as memory usage, CPU cycles, and power cycles, providing insights into the system's performance. Inference data may comprise operations performed by the software image that relate to the integrity of the environment, such as extending the environment with runtime images. The inference data might include a manifest structure containing a Merkle Tree of digests of the extended images.

In some examples, the measurements associated with the workload and also accordingly the attestation evidence associated with the workload may be dynamic measurements/attestation evidence. This may refer to real-time or runtime taken measurements/attestation evidence, that is while it is actively operating. Unlike static measurements, which may be taken at boot time or when the system is not running, dynamic measurements continuously monitor and assess the state of the CCE. This measurements/evidence may be used for detecting and responding to threats that may arise while the system is in use.

In some examples, the attestation evidence collection associated with the workload may comprise one or more attestation evidence associated with the workload. The one or more attestation evidence associated with the workload may be generated throughout the lifecycle of the workload. The one or more attestation evidence associated with the workload may be generated by one or more different CCEs to which the workload was deployed during its lifecycle. The one or more attestation evidence associated with the workload may be based on one or more measurement associated with the workload as described above. For example, the attestation evidence collection may comprise a plurality of attestation evidence associated with the workload which is regularly generated during the lifecycle of the workload. For example, the plurality of attestation evidence associated with the workload is generated in periodic intervals during the lifecycle of the workload.

In some examples, the attestation evidence collection may comprise attestation evidence generated for and/or after each update that was applied to a CCE and/or its parts that was executing the workload during the lifecycle of the workload. In some examples, an CCE, or a part of the CCE to which the workload is deployed during its lifecycle or the workload itself may be updated. Updating at least a part of a CCE may refer to an update of the workload that is currently being handled by the CCE or it may refer to an update of one or more layered environments of the CCE or it may refer to both. Updating the workload may comprise changes made to the applications and/or processes of the workload which are currently handle by the CCE, for example which are handled in an execution environment of the CCE (such as a tenant environment). This may include deploying new versions of the application that is being executed, applying bug fixes to the application that is executed, updating application configurations, or modifying the data sets being processed. A CCE may further comprise one or more layered environments. Updating one or more of the layered environments of the CCE may comprise modifications to the underlying secure infrastructure that supports the workload. This may include updating the execution environment that is handling the workload, or updating firmware, security policies, or the hardware security modules within the CCE. The update may be a seamless update, which may refer to the process of updating a CCE's components in such a way that it avoids disruption to the CCE's ongoing operations. A seamless update for one or more of the layered environments of the CCE may comprise updating one or more of the layered environments of the CCE without interrupting the overall functionality of the CCE and/or the workload's execution.

For example, an attestation evidence included in the attestation evidence collection, may be generated at a point in time before updating the CCE. The point in time before updating the CCE may refer to the moment after the CCE has received the request for the update but before the actual application of the update begins. For example, one or more measurements are taken at this specific point in time before the update is applied to the CCE. In some examples, the generating of the first attestation evidence is based on these one or more measurements of the CCE which are taken before updating. For example, an attestation evidence included in the attestation evidence collection, may be generated at a point in time after the update has been applied to the CCE. In some examples, the point in time after updating the CCE refers to the exact moment when the update process has been fully completed and the updated CCE has resumed its normal operations. For instance, this point in time may be defined as the moment when the CCE is able to perform post-update operations, such as executing new instructions or interacting with other CCE components. In another example, the point in time after the updating refers to any point in time before a next update or change is applied to the CCE. In yet another example, the point in time after the updating refers to a moment in between these two. At this specific point in time after the update has been applied to the CCE, one or more measurements are taken, ensuring that the evidence accurately reflects the state of the updated CCE. In some examples the generating of the attestation evidence after the update is based on these one or more measurements of the CCE which are taken after updating.

The attestation evidence collection may also comprise the attestation evidence of the source CCE before to the respective migration and the attestation evidence of the destination CCE after to the respective migration or values that correspond to the before or the after image. In some examples (such as if DICE generated unique keys were used in the attestation procedure), due to the use of different keys to protect attestation history it can be inferred that that a migration happened based on the attestation evidence of the source CCE before to the respective migration and the attestation evidence of the destination CCE after to the respective migration.

The migration history log may be obtained by the processing circuitry 140 from the storage circuitry 140 via the interface circuitry 120 or from an external source such as the second apparatus 200 via the interface circuitry 120. The migration history log may be data file that comprises information about one or more performed migrations of a workload. In other words, the migration history log may comprise information about all the migrations of the specific workload during its lifecycle. The migration history log may comprise information about local migrations of the workload and remote migrations of the workload during its lifecycle. For example, the migration history log may comprise information relevant contextual information about the conditions under which each migration of the workload was carried out. In some examples, the migration history log comprises for each of one or more prior performed local and/or remote migrations of the workload at least one of the following: information about a source CCE and a destination CCE of the respective migration of the workload, a migration time of the respective migration of the workload, an attestation evidence of the source CCE before to the respective migration and an attestation evidence of the destination CCE after to the respective migration of the workload. The attestation evidence of the source CCE before to the respective migration and an attestation evidence of the destination CCE after to the respective migration of the workload also provide the context for a before-migration-image and a after migration-image of the migration state. Attestation evidence that is generated before a migration of the workload may refer to a point in time after the processing circuitry 130 has received the request for the migration but before the actual migration is performed. For example, one or more measurements of the first evidence are taken at this specific point in time before the migration is performed. Attestation evidence that is generated at a point in time after the migration of the workload may refer to the exact moment when the migration process has been fully completed and the workload is installed in the second CCE. For example, the attestation evidence may be generated directly before the execution of the workload by the second CCE or directly after the execution of the workload by the CCE started. At this specific point in time after the migration of the workload, one or more measurements of the second CCE are taken, ensuring that the evidence accurately reflects the state of the migrated workload installed at the second CCE. The migration history log may provide a comprehensive history of the workload's movement across different CCEs at the same or different hosts, ensuring that each migration is traceable and that the security and integrity of the workload can be verified over its lifecycle. The migration history log may be used for understanding the workload's operational history, assessing its current security posture, and enabling forensic analysis in case of security incidents.

In some examples, the migration image may comprise at least one of the following: the workload, a runtime environment running the workload, supporting resources of the workload, a machine state of a host executing the workload, a workload execution status, migration policy of the workload, an attestation evidence of the first CCE and an attestation evidence of the second CCE. The machine state of the host executing the workload comprise the contents of the host processing circuitry registers, which are small storage areas within the processing circuitry that hold data, instructions, or addresses that the processing circuitry is actively using during processing. Additionally, it may comprise the memory contents, which involve the data currently stored in the host system's RAM that the workload is using, such as variables, active processes, and temporary files. These elements may provide a snapshot of the workload's operational state at the time of migration. The workload execution status may comprise any check-point/restart logs, processing circuitry registers, or other status information describing the current execution state. The execution status may comprise detailed records of where the workload is in its processing cycle, such as logs that allow the workload to resume from a specific point if interrupted, the contents of CPU registers at that moment, and any other relevant data that reflects the workload's exact operational state. This information may be used, for example together with the machine state of the host, for ensuring that when the workload is migrated, it continues running from the exact point where it left off, maintaining consistency and minimizing disruption.

Supporting resources of the workload may refer to one or more libraries, which are collections of prewritten code that the workload uses to perform common tasks. Further it may refer to system dependencies, which are specific software, configurations, and tools needed for the workload to run as intended. In some examples, the migration history log and/or the attestation evidence collection, may be referred to as migration image meta data and may be considered to be part of the migration image. In another example, the migration history log and/or the attestation evidence collection may be considered as separate data that is transmitted separately from the migration image.

In some examples, the processing circuitry 130 may be further configured to control the second CCE to install the migration image on the second CCE. That is, after the migration image is received by the second CCE, the processing circuitry 130 may initiate the deployment of the workload, ensuring that the workload is restored to its previous execution state with minimal disruption. In some examples, the migration history log, which may have also been transmitted to the second CCE, may be merged with an existing migration history log of the second CCE. This merged migration history log may provide a comprehensive record of all migration activities associated with the workload, including past migrations and the most recent transfer to the second CCE. Similarly, in some examples, the attestation evidence collection, which may have also been transmitted to the second CCE, may be merged with an existing attestation evidence collection log of the second CCE. The CCE(s) may be considered container environments that are generic but attested prior to workload being loaded into them. As described above, before the migration it is assessed if the second CCE container has suitable security properties prior to binding (migrating and loading) the source workload to the second CCE. After binding is final, a next attestation will reveal both the workload image, second CCE, and a binding of the workload image to the target container. This merging ensures that the complete security and integrity history of the workload, including all attestation evidence from both the first and second CCE, is preserved and accessible for future reference and verification.

The CCE(s) are "container" environments that are generic but attested prior to workload being loaded into the container.

Part of migration method is to assess if the target CCE "container" has suitable security properties prior to binding (migrating and loading) the source WL to the target container. After binding is final, a next attestation will reveal both the WL image, target container, and a binding of the WL image to the target container.

In some examples, the processing circuitry 130 may be further configured ton obtain a third attestation evidence of the second CCE. The third attestation evidence may be generated after installation of the workload and prior to execution of the workload in the second CCE. In some examples, the third second attestation evidence may be added to the attestation evidence collection and/or to the migration history log.

The above described technique may ensure a securely migrating of a workload between two CCEs by obtaining and transmitting a migration history log, an attestation evidence collection, and a migration image. This approach offers makes live migration between CCEs feasible by using attestation evidence which verifies the integrity of the memory-resident workload rather than relying on disk-resident, boot-time measurements. This may ensure that the integrity of the workload is preserved across migrations, allowing for better tracking and assessment of the workload's security posture. Further, by enabling a seamless migration of workloads from resource-constrained CCEs to more resource-rich CCEs, this approach minimizes workload downtime and reduces the need for reinitialization or complex setup sequences, thus enhancing operational efficiency. Furthermore, by using industry standards for attestation evidence, this approach supports broader adoption of live migration in CCEs, ensuring that workloads may be securely and efficiently migrated while maintaining high standards of data integrity and security.

In some examples, the processing circuitry 130 may be configured to obtain a first attestation evidence of the workload being executed in the first CCE. In some examples, the processing circuitry 130 may be configured to obtain a second attestation evidence of the second CCE. For example, the first and the second attestation evidence may be generated after the request to migrate the workload and before performing the migration. Further, for example, the processing circuitry 130 may determine if a migration of the workload from the first to the second CCE is performed based on the first and the second attestation evidence.

For example, the first and the second attestation evidence may be compared and only if they match, may the migration be performed. In another example, the first and the second attestation evidence may be checked, for example by an attestation verifier, and only if both are verified - that is the first and the second CCE are secure and un-tampered - the migration may be performed. In some examples, the first and the second attestation evidence may be added to the attestation evidence collection and/or to the migration history log.

In some examples, the processing circuitry 130 may be configured to determine if the migration of the workload is performed by comparing a security level (also referred to as Security Version Number (SVN)) of the first CCE to a security level of the second CCE. The first attestation evidence may comprise the security level of the first CCE and the second attestation evidence may comprise the security level of the second CCE. The security level of a CCE may be a measure of its capability to protect the integrity, confidentiality, and availability of the workloads it hosts. The security level may be determined by evaluating a range of factors including hardware integrity and secure boot processes; firmware security, such as the implementation of secure firmware updates and vulnerability protections; software robustness, including the use of secure coding practices and regular security audits; and the strength of implemented security measures, such as encryption, access controls, and intrusion detection systems. The higher the security level of a CCE the more secure it is. The security level may be determined by the processing circuitry 130 by analyzing the attestation evidence of the of the CCE and/or its parts, which provide verified information about the state and integrity of the hardware, firmware, software, and security measures implemented within the environment. In some examples, the security level of the first/second CCE may be provided by the first/second CCE processing circuitry 130. For example, the migration may only be performed if the security level of the first and the second CCE are equal or similar, that is within a predefined range. In some examples, the processing circuitry 130 is further configured to determine that the migration of the workload is performed if a difference between the security level of the first CCE and the security level of the second CCE is within a predetermined range. In some examples, the processing circuity 130 may be further configured to determine the security level of the second CCE and perform the migration of the workload only if the security level is in a predetermined range. This may help maintain the security and integrity of the workload during migration by preventing it from being moved to a CCE with an unappropriated low security level, which could expose it to vulnerabilities or risks.

In some examples, the predetermined range of a security level of a CCE to which the workload may be migrated to may be based on migration policy of the workload. In some examples, the allowed predetermined range of the difference between the security level of the first CCE and the security level of the second CCE may be based on migration policy of the workload. A migration policy may be set of predefined criteria and conditions tailored to the specific requirements of a workload that must be met for its migration from one CCE to another. The migration policy may ensure the security and integrity of the workload throughout its lifecycle. The migration policy may comprise the required security level of a CCE allowed to receive the workload. The migration policy may also comprise conditions regarding the configuration and operational state of a CCE allowed to receive the workload to ensure compatibility and security. By tailoring the migration policy to correspond to the specific workload, the policy addresses the unique security and operational needs of that workload. This ensures that workloads are only transferred to environments with adequate security protections, thus preserving the overall security posture and trustworthiness of the system. The migration policy may be stored within the migration history log or may be carried with the workload itself.

In some examples, the processing circuitry 130 may be further configured to receive a first public key from the second CCE. The public key may be part of a private-public key pair generated for example by the second CCE. The processing circuitry 130 may be further configured to encrypt the migration image with a symmetric key that may be generated by the first CCE. The symmetric key may be used for its efficiency in encrypting large amounts of data, such as the entire migration image. The migration image may comprise the attestation evidence collection and/or the migration history log. In some examples, the attestation evidence collection and/or the migration history log may be encrypted separately, potentially using a different symmetric key or the same. The processing circuitry 130 may be further configured to encrypt the symmetric key with the received first public key. The first public key may be used to ensure that only the second CCE can decrypt this symmetric key and, consequently, the migration image. The processing circuitry 130 may be further configured to transmit the encrypted migration image (and, in some examples, the separately encrypted attestation evidence collection and/or the migration history log) and the encrypted symmetric key to the second CCE. Upon receiving these encrypted components, the second CCE may use the first private key of the first private-public key pair to decrypt the symmetric key. The symmetric key is then used to decrypt the migration image, and if applicable, the separately encrypted attestation evidence collection and migration history log. This decryption process ensures that the second CCE can securely reconstruct the workload in its previous state

In some examples, the processing circuitry 130 may be further configured to sign the migration image (which may comprise the attestation evidence collection and/or the migration history log) with a second private key. This signing process ensures the authenticity and integrity of the migration image, verifying that it has not been tampered with during transmission. The second private key may be part of a second private-public key pair which may be generated by the first CCE, where the private key is kept secure within the first CCE, and the corresponding public key is used for verification purposes. After signing the migration image with the second private key, the processing circuitry 130 may be further configured to transmit the corresponding second public key of the second private-public key pair to the second CCE. The second CCE may then use the received second public key to verify the signature on the migration image once it is received. This verification step ensures that the migration image originated from the first CCE and has not been altered during transmission. If the verification is successful, the second CCE may confidently proceed to decrypt and/or install the migration image, knowing that it maintains the integrity and authenticity required for secure operation. For example, an X.509 certificate may be used to encapsulate the second public key, providing a standard and trusted format for public key distribution and verification. The second private key, corresponding to this public key, may be used to sign the migration image, ensuring its authenticity and integrity. The X.509 certificate allows the second CCE to reliably verify the public key's association with the first CCE's identity, thereby strengthening the security of the migration process by leveraging established public key infrastructure (PKI) protocols. This ensures that the migration image is securely signed by the first CCE and verifiable by the second CCE at every stage.

In some examples, the apparatus 100 may be a server (or may be a part of a server). For example, the server may comprise the apparatus 100. A server may be a computer system designed to manage, store, process, and deliver data, resources, or services to other computers (clients) over a network. For example, the server may perform the migration of the workload as described above and below and may communicate with the second apparatus 200 hosting the first CCE (also referred to as the source host) and the third apparatus 300 hosting the second CCE (also referred to as the destination host). This system is also described below with regards to Fig. 4. For example, the apparatus 100 may communicate with the second apparatus 200 and third apparatus 300 and may manage the migration of the workload. For example, the apparatus 100 may be an edge server, a web server, a management server, or an application server. An edge server may be a server located closer to the end-users or data sources, often at the periphery of a network, designed to reduce latency and enhance processing efficiency by handling data locally. A web server may be a server that hosts websites and web applications, delivering content to users over the internet or an intranet, handling requests from clients, and serving them the appropriate web pages or resources. A management server may be a server that provides administrative control over a network or a set of systems, managing tasks such as configuration, monitoring, and orchestration of resources and services within an IT environment. An application server may be a server that hosts and runs specific business applications, providing the necessary runtime environment for applications to execute, often handling tasks like transaction processing, data access, and business logic execution for client applications.

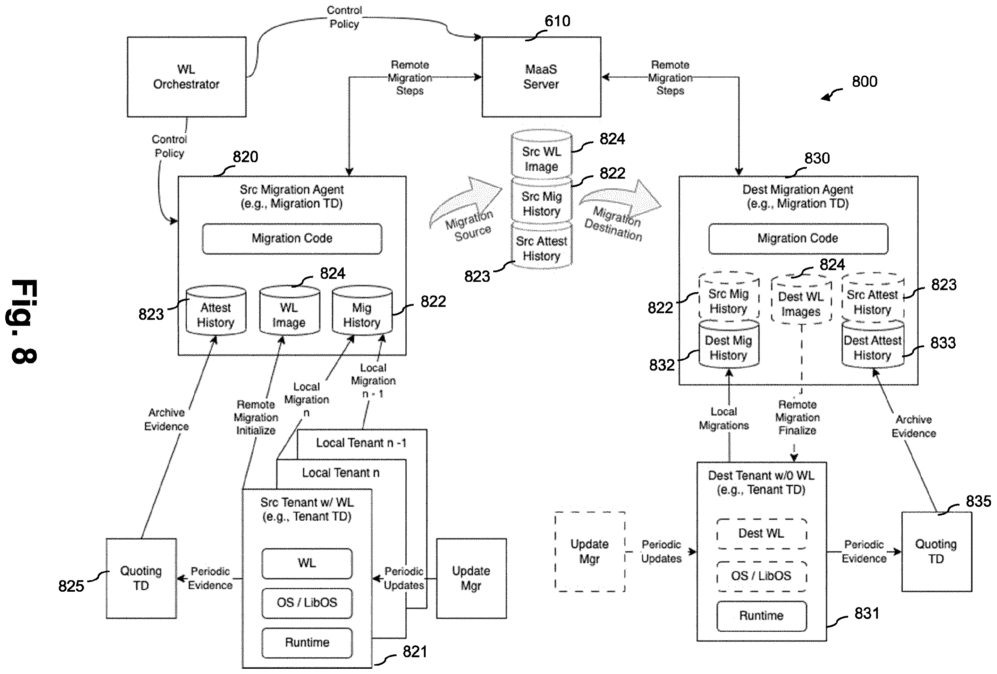

For example, some or all steps that are performed by the first CCE may be performed by a migration agent (also referred to as migration environment or service environment) of the first CCE. Similarly, in some examples, some or all steps that are performed by the first CCE may be performed by a migration agent (also referred to as migration environment or service environment) of the second CCE. This is also described with regards to Fig. 8 below.

Further details and aspects are mentioned in connection with the examples described below. The example shown in Fig.1 may include one or more optional additional features corresponding to one or more aspects mentioned in connection with the proposed concept or one or more examples described below (e.g., Figs. 2 - 8).

**Fig. 2** illustrates a block diagram of an example of a second apparatus 200 or second device 200. The second apparatus 200 comprises circuitry that is configured to provide the functionality of the second apparatus 200. For example, the second apparatus 200 of Fig. 2 comprises interface circuitry 220, processing circuitry 230 and (optional) storage circuitry 240. For example, the processing circuitry 230 may be coupled with the interface circuitry 220 and optionally with the storage circuitry 240.

For example, the processing circuitry 230 may be configured to provide the functionality of the second apparatus 200, in conjunction with the interface circuitry 220. For example, the interface circuitry 220 is configured to exchange information, e.g., with other components inside or outside the second apparatus 200 and the storage circuitry 240. Likewise, the device 200 may comprise means that is/are configured to provide the functionality of the device 200.

The components of the device 200 are defined as component means, which may correspond to, or implemented by, the respective structural components of the second apparatus 200. For ex-ample, the device 200 of Fig. 2 comprises means for processing 230, which may correspond to or be implemented by the processing circuitry 230, means for communicating 220, which may correspond to or be implemented by the interface circuitry 220, and (optional) means for storing information 240, which may correspond to or be implemented by the storage circuitry 240. In the following, the functionality of the device 200 is illustrated with respect to the second apparatus 200. Features described in connection with the second apparatus 200 may thus likewise be applied to the corresponding device 200.

In general, the functionality of the processing circuitry 230 or means for processing 230 may be implemented by the processing circuitry 230 or means for processing 230 executing machine-readable instructions. Accordingly, any feature ascribed to the processing circuitry 230 or means for processing 230 may be defined by one or more instructions of a plurality of machine-readable instructions. The second apparatus 200 or device 200 may comprise the ma-chine-readable instructions, e.g., within the storage circuitry 240 or means for storing in-formation 240.

The interface circuitry 220 or means for communicating 220 may correspond to one or more inputs and/or outputs for receiving and/or transmitting information, which may be in digital (bit) values according to a specified code, within a module, between modules or be-tween modules of different entities. For example, the interface circuitry 220 or means for communicating 220 may comprise circuitry configured to receive and/or transmit information.

For example, the processing circuitry 230 or means for processing 230 may be implemented using one or more processing units, one or more processing devices, any means for processing, such as a processor, a computer or a programmable hardware component being operable with accordingly adapted software. In other words, the described function of the processing circuitry 230 or means for processing 230 may as well be implemented in software, which is then executed on one or more programmable hardware components. Such hardware components may comprise a general-purpose processor, a Digital Signal Processor (DSP), a micro-controller, etc.

For example, the storage circuitry 240 or means for storing information 240 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage. For example, the storage circuitry 240 may store a (UEFI) BIOS.

The processing circuitry 230 is configured to transmit a migration history log to a migration server. The migration history log comprises data about one or more performed migrations of a workload. The workload is executed in a first CCE. The processing circuitry 230 is further configured to transmit an attestation evidence collection associated with the workload to the migration server. The attestation evidence collection associated with the workload comprises one or more attestation evidence associated with the workload. The processing circuitry 230 is further configured to generate a migration image of the workload for a migration of the workload from the first CCE to a second CCE. The processing circuitry 230 is further configured to transmit the migration image, the attestation evidence collection and/or the migration history log to the migration server.

For example, the migration server may be implemented by the apparatus 100 of Fig.1. For example, the first CCE may be run on a first host, for example the second apparatus 200 any may be executed by the processing circuitry 230. For example, the processing circuitry 230 may be configured to carry out the steps of the first CCE as described above with regards to Fig. 1. For example, the second CCE may run on second host, for example the third apparatus 300 and may be executed by the processing circuitry 330 (see Fig. 3 below). For example, the processing circuitry 230 may communicate with the migration server and the second CCE via the interface circuitry 220. The first host and the second host may be different from each other. The first host and the second host may be physically separated.

In some examples, the processing circuitry 230 may be further configured to generate an attestation evidence associated with the workload executed in the first CCE. The processing circuitry 230 may be further configured to transmit the attestation evidence associated with the workload to the migration server. The attestation evidence may comprise a security level of the first CCE.

Further details and aspects are mentioned in connection with the examples described above or below. The example shown in Fig. 2 may include one or more optional additional features corresponding to one or more aspects mentioned in connection with the proposed concept or one or more examples described above (e.g., Fig. 1) or below (e.g., Figs. 3 - 8).

**Fig. 3** illustrates a block diagram of an example of a second apparatus 300 or second device 300. The second apparatus 300 comprises circuitry that is configured to provide the functionality of the second apparatus 300. For example, the second apparatus 300 of Fig. 3 comprises interface circuitry 330, processing circuitry 330 and (optional) storage circuitry 340. For example, the processing circuitry 330 may be coupled with the interface circuitry 330 and optionally with the storage circuitry 340.

For example, the processing circuitry 330 may be configured to provide the functionality of the second apparatus 300, in conjunction with the interface circuitry 320. For example, the inter-face circuitry 320 is configured to exchange information, e.g., with other components inside or outside the second apparatus 300 and the storage circuitry 340. Likewise, the device 300 may comprise means that is/are configured to provide the functionality of the device 300.

The components of the device 300 are defined as component means, which may correspond to, or implemented by, the respective structural components of the second apparatus 300. For ex-ample, the device 300 of Fig. 3 comprises means for processing 330, which may correspond to or be implemented by the processing circuitry 330, means for communicating 320, which may correspond to or be implemented by the interface circuitry 320, and (optional) means for storing information 340, which may correspond to or be implemented by the storage circuitry 340. In the following, the functionality of the device 300 is illustrated with respect to the second apparatus 300. Features described in connection with the second apparatus 300 may thus likewise be applied to the corresponding device 300.

In general, the functionality of the processing circuitry 330 or means for processing 330 may be implemented by the processing circuitry 330 or means for processing 330 executing machine-readable instructions. Accordingly, any feature ascribed to the processing circuitry 330 or means for processing 330 may be defined by one or more instructions of a plurality of machine-readable instructions. The second apparatus 300 or device 300 may comprise the ma-chine-readable instructions, e.g., within the storage circuitry 340 or means for storing in-formation 340.

The interface circuitry 320 or means for communicating 320 may correspond to one or more inputs and/or outputs for receiving and/or transmitting information, which may be in digital (bit) values according to a specified code, within a module, between modules or be-tween modules of different entities. For example, the interface circuitry 320 or means for communicating 320 may comprise circuitry configured to receive and/or transmit information.

For example, the processing circuitry 330 or means for processing 330 may be implemented using one or more processing units, one or more processing devices, any means for processing, such as a processor, a computer or a programmable hardware component being operable with accordingly adapted software. In other words, the described function of the processing circuitry 330 or means for processing 330 may as well be implemented in software, which is then executed on one or more programmable hardware components. Such hardware components may comprise a general-purpose processor, a Digital Signal Processor (DSP), a micro-controller, etc.

For example, the storage circuitry 340 or means for storing information 340 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage. For example, the storage circuitry 340 may store a (UEFI) BIOS.

The processing circuitry 330 is configured to transmit an attestation evidence of a second CCE to a migration server. The second CCE is a migration destination for a workload being executed in a first CCE.

In some examples, the processing circuitry 330 may be further configured to receive a migration image of the workload, an attestation evidence collection associated with the workload and/or a migration history log of the workload from the migration server.

In some examples, the processing circuitry 330 may be further configured to merge the attestation evidence collection associated with the workload with an attestation evidence collection of the CCE. In some examples, the processing circuitry 330 may be further configured to merge the migration history log of the workload with a migration history log of the CCE.

For example, the migration server may be implemented by the apparatus 100 of Fig.1. For example, the first CCE may be run on a first host, for example the second apparatus 200 any may be executed by the processing circuitry 230 (see Fig. 2 above). For example, the second CCE may run on a second host, for example the third apparatus 300, and may be executed by the processing circuitry 330. For example, the processing circuitry 330 may be configured to carry out the steps of the second CCE as described above with regards to Fig. 1. For example, the processing circuitry 330 may communicate with the migration server and the first CCE via the interface circuitry 320. The first host and the second host may be different from each other. The first host and the second host may be physically separated.

Further details and aspects are mentioned in connection with the examples described above or below. The example shown in Fig. 3 may include one or more optional additional features corresponding to one or more aspects mentioned in connection with the proposed concept or one or more examples described above (e.g., Figs. 1 - 2) or below (e.g., Figs. 4 - 8).

**Fig. 4** illustrates a system 400 for migrating a workload. The system 400 comprises the apparatus 100 as described with regards to Fig. 1, which may be the migration server. The system 400 further comprises the second apparatus 200 as described with regards to Fig. 2, which may be a first host executing the first CCE. The system 400 further comprises the third apparatus 300 as described with regards to Fig. 3, which may be a second host executing the second CCE.

As described above, the migration server 100 may perform the migration of the workload from the first CCE to the second CCE. For example, the apparatus 100 may communicate with the second apparatus 200 and third apparatus 300 and may manage the migration of the workload.

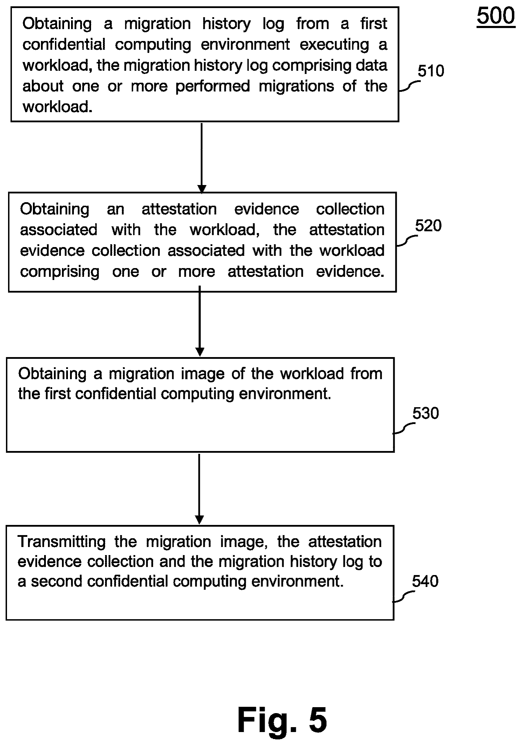

Further details and aspects are mentioned in connection with the examples described above or below. The example shown in Fig. 4 may include one or more optional additional features corresponding to one or more aspects mentioned in connection with the proposed concept or one or more examples described above (e.g., Figs. 1 - 3) or below (e.g., Figs. 5 - 8).

**Fig. 5** illustrates a flowchart of an example of a method 500. The method 500 may, for instance, be performed by one or more apparatuses as described herein, such as apparatus 100, apparatus 200 and/or apparatus 300. The method 500 comprises 510 obtaining a migration history log from a first CCE executing a workload. The migration history log comprises data about one or more performed migrations of the workload. The method 500 further comprises 520 obtaining an attestation evidence collection associated with the workload. The attestation evidence collection associated with the workload comprises one or more attestation evidence associated with the workload. The method 500 further comprises 530 obtaining a migration image of the workload from the first CCE. The method 500 further comprises 540 transmitting the migration image, the attestation evidence collection and the migration history log to a second CCE.

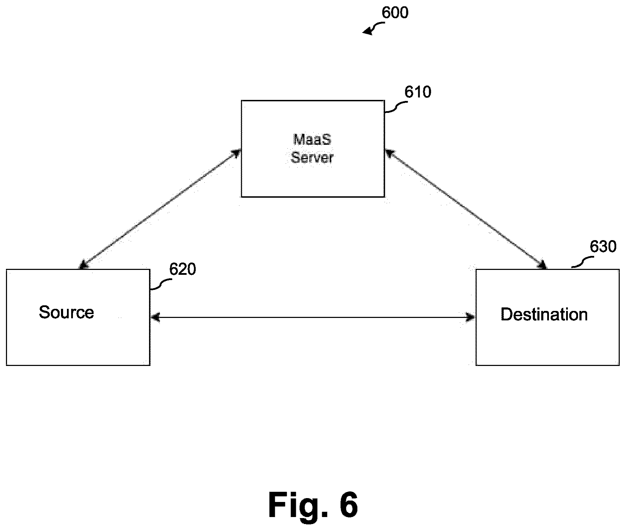

More details and aspects of the method 500 are explained in connection with the proposed technique or one or more examples described above (e.g., with reference to Figs. 1 - 4), or below. The method 500 may comprise one or more additional optional features corresponding to one or more aspects of the proposed technique, or one or more examples described above (e.g., Figs. 1 - 4) or below (e.g., Figs. 6 - 8).

### Further Examples

**Fig. 6** illustrates an example of a system 600 for migrating a workload. The system 600 comprises three entities: A source host, hosting the source workload (SWL) operating within a first CCE (also referred to as source CCE) (such as Intel ^{®} TDX trusted domain Intel ^{®} SGX enclave). The system 600 further comprises migration server 610. The SWL is converted to a migratable image that is conveyed to the migration server 610. The migration server 610 may be implemented as a Migration-as-a-Service (MaaS). The system 600 further comprises a destination host 620 which is hosting a second CCE (also referred to as destination CCE) where for the destination workload (DWL). The migration server 610 stages the migration image for installation on the destination host 620,

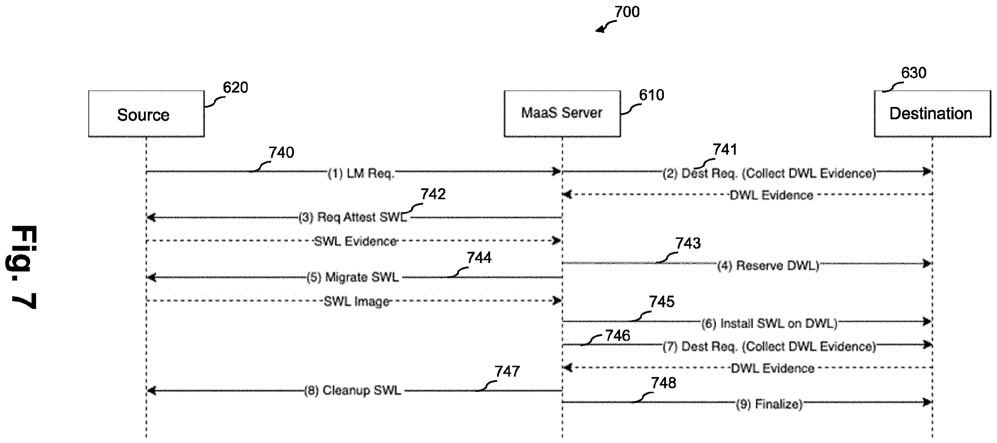

Further details and aspects are mentioned in connection with the examples described above or below. The example shown in Fig. 5 may include one or more optional additional features corresponding to one or more aspects mentioned in connection with the proposed concept or one or more examples described above (e.g., Figs. 1 - 5) or below (e.g., Figs. 7 - 8).

**Fig. 7** illustrates an example of a flowchart 700 of a live migration of a workload by the system 600. In step 740 the source host 620 requests a live migration from the migration server 610, for example in response to an orchestrator that may detect sub-optimal performance or may be responding to operator input. The resource utilization requirements are supplied with the request which assist the migration server 610 with identifying a suitable destination host 630. In step 741 the migration server 610 requests attestation evidence from the identified destination CCE. For example, a quoting agent of the destination CCE (such a TDX Quoting TD (QTD)), may obtain a quote that may be returned to the migration server 610 describing an available TD such as an idle container without a running workload.

The attestation evidence is returned along with a migration key (MK_dest) from the destination CCE to the migration server 610 that may be used to protect the migration image. In step 742 the migration server 610 requests attestation evidence from the source CCE (such as a Quoting Agent (as described above)). The source CCE and destination CCE properties may be compared by the migration server 610 based on the received attestation evidence to determine if the source and the destination CCEs security properties are similar enough for live migration of the workload. The workload resource requirements are verified to be appropriate for the source CCE. In step 743 the migration server 6140 reserves the destination CCE for the migrated workload. For example, if the destination CCE is idling, it transitions to a migration pending state. This may also include provisioning an authentication key (AK_src) or trust anchor from the source CCE to the destination CCE that may be used later to authenticate the migration image. In step 744 the migration sever 610 requests the source CCE to prepare a migratable image of itself. This may entail several operations that may flush read/write buffers, suspend execution, save operational state such as registers, and copies memory into the migration image of the source host 620. For example, these operations may be implemented by a Migration Agent of the source CCE (for example a TDX Migration TD). Local data sets may be archived into the migration image (or network references created to allow remote access from the destination CCE). The migration image is encrypted using migration key (MK_dest). For example, a symmetric encryption key (SEK) may be generated locally at the source CCE, used to bulk encrypt the image, then the symmetric encryption key is wrapped using the MK_dest public encryption key. The encrypted migration image is conveyed to the destination CCE. This example shows it being brokered by the migration server 610, but alternatives may allow direct conveyance from the source host 620 to the destination host 630. In step 745 the migration server 610 installs the migration image into the destination CCE. This may include authenticating the migration image, decrypted it, loading the image into memory, setting registers, and configuring IO / other resources. This may be implemented by a Migration Agent of the destination CCE. In step 746, before the migrated image executes in the destination CCE, the migration server 610 requests attestation evidence from the newly configured destination CCE. This may be accomplished using a Quoting Agent of the destination CCE (as described above). The migration server verifies the loaded image still satisfies operator integrity, resource utilization, and other operational requirements. In step 747 left-over migration resources or state in the source CCE are cleaned up. In step 748 the migration server 610 instructs the Migration Agent of the destination CCE to schedule the migrated workload for execution / operation. Any left-over migration resources or state are cleaned up on the destination CCE.

Further details and aspects are mentioned in connection with the examples described above or below. The example shown in Fig. 6 may include one or more optional additional features corresponding to one or more aspects mentioned in connection with the proposed concept or one or more examples described above (e.g., Figs. 1 - 6) or below (e.g., Fig. 8)

As described above, some steps of the migration of a locally executing workload may be performed by migration agents (also referred to as migration environment or service environment) of the source CCE and the destination CCE. For example, the MAs may be implemented using Intel^{®} TDX TD containing migration code as described in Fig. 8.

**Fig. 8** illustrates a migration agent architecture 800 for migration of a workload. For example, the source migration agent 820 is part of the source CCE which may be executed by the source host 620. For example, the destination migration agent 830 is part of the destination CCE which may be executed by the destination host 830. The migration agent architecture 800 depicts an example of tenant lifecycles for both source tenant environment 821 and the destination tenant environment 831. The source tenant environment 821 is hosting the workload, which may have undergone several local migrations from (n-1) to (n+1) during the lifecycle of the workload. A migration history log 822 is maintained by the source migration agent 820 that captures related historical context of the migrations of the workload such as the local source and destination hosting environments, the time of migration, and attestation events just before and just after migration.

The source tenant environment 820 may have been updated during its operational lifecycle one or more times. This may comprise updating of the workload image, OS/LibOS that supports the workload operation, or an update of the runtime component that interfaces to the source host 620. For example, an Intel^{®} TD tenant environment may interface to an Intel^{®} TD Module, Intel^{®} TDX, and Intel^{®} Quoting TD. For example, an update manager may replace or patch one or more of the various components within the source CCE, such as within the tenant environment 821 (e.g., Tenant TD). For each update that was performed, the source quoting environment 825 may be invoked to capture attestation evidence just before and just after the update. These captured attestation evidence may be maintained by the first CCE, for example, by the quoting environment 825 in an attestation evidence collection 823 (also referred to as history of attestation evidence) using the migration agent 820 (e.g., Migration TD). The attestation evidence collection (histories) may comprise snapshots of the workload's transited environments during its lifetime as a local workload. The migration agent maintains logs of both attestation evidence and local migration events. If there are security relevant conditions that result from any of the migration and/or update events, the logs will enable reconstruction of these events such that a forensic investigator may evaluate the security risk across the entire lifetime of the workload. Remote migration considers the possibility that the targeted destination CCE may have historical context as well. For example, if a workload is migrated that depends on the destination CCE being pre-provisioned with, for example, an operating system (OS), library operating system (libOS), common libraries, or a migrated or updated runtime environment. The destination migration agent may have destination migration history log 832 and attestation evidence collection 833.

The workload to be migrated may be read out of the source tenant environment 821, be serialized into a source workload image 824 (also referred to as migration image) and then conveyed to a destination CCE with the help of a migration server 610. The workload image may be loaded into a destination tenant environment 831. The source migration history log 822 may be combined with the destination migration history 832 to form a more complete merged migration history of the respective local migration histories of the source and destination hosting environments (e.g., Src Tenant TD and Dest Tenant TD). The same is true for source attestation evidence collection 823 and destination attestation evidence collection 833 which are combined into a merged attestation evidence collection to create a deeper history of attestation events.

Further, the source migration history log 822 may contain a migration policy or digest of a migration policy used to direct a migration event of the workload. In the event of a failed, aborted, or returned migrated module, the migration history log 822 may contain a record of the target migration environment that includes attestation evidence describing the migration target including evidence of the update history of the target. The returned migrated module may resume operation on the source CCE as if no migration took place, except that the migration history will contain the attestation history of the failed migration's target and attestation and migration history of a second instance of the source CCE where the failed migration rolled back to the source CCE.

The migrated workload image 824 is loaded into the destination CCE, for example, the destination tenant environment 831 and marked ready to run. Upon finalization of the remote migration operation, the newly loaded workload may be attested by the destination quoting environment 835 to collect attestation evidence that describes the complete workload with its hosting CCE including installed components, inherited components, and root-of-trust capabilities (e.g., Intel^{®} TDX and Intel^{®} TD Module).

The remote migration operation may generate remote migration log entries that record the remote migration events into the migration history log. The remote migration operation may be controlled by policies shared with the migration server 610 and either or both local migration agents. Migration policies may describe the suitable destination migration CCEs given the local migration history. For example, a workload may carry a policy (e.g., SLA) containing the security, integrity, privacy, and availability requirements. A migration policy may consider the constraints in the SLA along with migration and attestation histories to determine the minimum viable destination environment's capabilities. For example, a security version number (SVN) may be used to describe a set of environmental requirements. SVN values may be used as an efficient way to evaluate suitability of a migration from a source environment having SVN=1 to a target destination environment having SVN=3. An SVN policy may describe an SVN range that is suitable. For example, an SVN policy that specifies a minimum SVN of 2 to a maximum of 3 would allow migration of an image with SVN=2 but disallow migration of an image with SVN=1.

For example, the destination tenant environment 831 may not be operational such that a runtime, library, or workload may be available to interact with a quoting environment (e.g., Quoting TD) or an update manager (UM). The migration agent may step in as an environment that can coordinate attestation and update lifecycle events. For example, an Intel^{®} Migration TD may interface with the Quoting TD and UM to proxy these signals. The migration TD then uses dedicated interfaces to, for example, the Intel^{®} TD Module or Intel^{®} TDX instructions to solicit attestation evidence from the tenant TD (without it having to be operational) or to write new tenant TD images into its memory pages while tenant TD execution is suspended. For example, these signals may be defined such that the migration TD actions are subject to collection of migration TD attestation evidence, for example, by the Quoting TD. Collection of the migration TD attestation evidence may be prerequisite for migration TD to perform trusted operations. For example, the TD Module may inspect migration TD attestation reports as a condition of allowing the migration TD to perform operations affecting a tenant TD.

For example, both local and remote migration may be performed in such a way that it may be considered live migration. As described above, in this case for example, the machine state (i.e., CPU register set, memory pages, storage resources and offsets, connected network resources, etc.) may be obtained from the workload, runtime, and host as a part of workload image construction. Then used to re-construct the similar context in the destination CCE as part of image loading. An SLA policy may be used to specify an acceptable window in which the workload may be unavailable, but operational such that SLA "liveness" parameters can be met despite there being latency between the workload image migration initialization and finalization.

Further details and aspects are mentioned in connection with the examples described above. The example shown in Fig. 8 may include one or more optional additional features corresponding to one or more aspects mentioned in connection with the proposed concept or one or more examples described above (e.g., Figs. 1 - 7).

In the following, some examples of the proposed concept are presented:
An example (e.g., example 1) relates to an apparatus for migrating a workload comprising interface circuitry, machine-readable instructions and processing circuitry to execute the machine-readable instructions to obtain a migration history log from a first confidential computing environment executing a workload, the migration history log comprising data about one or more performed migrations of the workload, obtain an attestation evidence collection associated with the workload, the attestation evidence collection associated with the workload comprising one or more attestation evidence associated with the workload, obtain a migration image of the workload from the first confidential computing environment, transmit at least one of the migration image, the attestation evidence collection and the migration history log to a second confidential computing environment.

Another example (e.g., example 2) relates to a previous example (e.g., example 1) or to any other example, further comprising that the processing circuitry is further to execute the machine-readable instructions to obtain a first attestation evidence of the workload being executed in the first confidential computing environment, and obtain a second attestation evidence of the second confidential computing environment, and determine if a migration of the workload from the first to the second confidential computing environment is performed based on the first and the second attestation evidence.

Another example (e.g., example 3) relates to a previous example (e.g., example 2) or to any other example, further comprising that the processing circuitry is further to execute the machine-readable instructions to determine if the migration of the workload is performed by comparing a security level of the first confidential computing environment to a security level of the second confidential computing environment, wherein the first attestation evidence comprises the security level of the first confidential computing environment and the second attestation evidence comprises the security level of the second confidential computing environment.

Another example (e.g., example 4) relates to a previous example (e.g., example 3) or to any other example, further comprising that the processing circuitry is further to execute the machine-readable instructions to determine that the migration of the workload is performed if a difference between the security level of the first confidential computing environment and the security level of the second confidential computing environment is in a predetermined range.

Another example (e.g., example 5) relates to a previous example (e.g., one of the examples 1 to 4) or to any other example, further comprising that the processing circuitry is further to execute the machine-readable instructions to determine the security level of the second confidential computing environment and perform the migration of the workload only if the security level is in a predetermined range.

Another example (e.g., example 6) relates to a previous example (e.g., one of the examples 4 or 5) or to any other example, further comprising that the predetermined range is based on migration policy of the workload.

Another example (e.g., example 7) relates to a previous example (e.g., one of the examples 1 to 6) or to any other example, further comprising that the processing circuitry is further to execute the machine-readable instructions to obtain a third attestation evidence of the second confidential computing environment, the third attestation evidence is generated after installation of the workload and prior to execution of the workload in the second confidential computing environment.

Another example (e.g., example 8) relates to a previous example (e.g., one of the examples 1 to 7) or to any other example, further comprising that the migration history log comprises for each of one or more prior performed migrations of the workload at least one of the following information about a source confidential computing environment and a destination confidential computing environment of the respective migration of the workload, a migration time of the respective migration of the workload, an attestation evidence of the source confidential computing environment before to the respective migration and an attestation evidence of the destination confidential computing environment after to the respective migration of the workload.

Another example (e.g., example 9) relates to a previous example (e.g., one of the examples 1 to 8) or to any other example, further comprising that the first confidential computing environment is executing on a first host and the second confidential computing environment is executing on a second host, wherein the first host and the second host are different from each other.

Another example (e.g., example 10) relates to a previous example (e.g., one of the examples 1 to 9) or to any other example, further comprising that the processing circuitry is further to execute the machine-readable instructions to receive a first public key from the second confidential computing environment, and encrypt the migration image with a symmetric key by the first confidential computing environment, and encrypt the symmetric key with the first public key, and transmit the encrypted migration image and the encrypted symmetric key to the second confidential computing environment.

Another example (e.g., example 11) relates to a previous example (e.g., one of the examples 1 to 10) or to any other example, further comprising that the processing circuitry is further to execute the machine-readable instructions to sign the migration image with a second private key and transmit the corresponding second public key to the second confidential computing environment.

Another example (e.g., example 12) relates to a previous example (e.g., one of the examples 1 to 11) or to any other example, further comprising that the migration image comprises at least one of the following the workload, a runtime environment running the workload, supporting resources of the workload, a machine state of a host executing the workload, a workload execution status and a migration policy of the workload.

Another example (e.g., example 13) relates to a previous example (e.g., one of the examples 1 to 12) or to any other example, further comprising that the processing circuitry is further to execute the machine-readable instructions to receive a request of the migration of the workload.

Another example (e.g., example 14) relates to a previous example (e.g., one of the examples 1 to 13) or to any other example, further comprising that the request of the migration of the workload is received via a web interface of the apparatus.

Another example (e.g., example 15) relates to an edge server, comprising the apparatus according to any one of examples 1 to 13.

An example (e.g., example 16) relates to an apparatus comprising interface circuitry, machine-readable instructions and processing circuitry to execute the machine-readable instructions to transmit a migration history log to a migration server, the migration history log comprising data about one or more performed migrations of a workload, the workload being executed in a first confidential computing environment, and transmit an attestation evidence collection associated with the workload to the migration server, the attestation evidence collection associated with the workload comprising one or more attestation evidence associated with the workload, generate a migration image of the workload for a migration of the workload from the first confidential computing environment to a second confidential computing environment, and transmit the migration image, the attestation evidence collection and/or the migration history log to the migration server.

Another example (e.g., example 17) relates to a previous example (e.g., example 16) or to any other example, further comprising that the processing circuitry is further to execute the machine-readable instructions to generate an attestation evidence associated with the workload executed in the first confidential computing environment, and transmit the attestation evidence associated with the workload to the migration server, wherein the attestation evidence comprises a security level of the first confidential computing environment.

An example (e.g., example 18) relates to an apparatus comprising interface circuitry, machine-readable instructions and processing circuitry to execute the machine-readable instructions to transmit an attestation evidence of a second confidential computing environment to a migration server, the second confidential computing environment being a migration destination for a workload being executed in a first confidential computing environment.

Another example (e.g., example 19) relates to a previous example (e.g., example 18) or to any other example, further comprising that the processing circuitry is further to execute the machine-readable instructions to receive a migration image of the workload, an attestation evidence collection associated with the workload and/or a migration history log of the workload from the migration server.

Another example (e.g., example 20) relates to a previous example (e.g., example 19) or to any other example, further comprising that the processing circuitry is further to execute the machine-readable instructions to merge the attestation evidence collection of the workload with an attestation evidence collection of the second confidential computing environment and merge the migration history log of the workload with a migration history log of the second confidential computing environment.

An example (e.g., example 21) relates to system comprising a migration server according to any one of examples 1 to 15, a first host according to any one of examples 16 to 18, and a second host according to any one of examples 18 to 20.

An example (e.g., example 22) relates to method comprising obtaining a migration history log from a first confidential computing environment executing a workload, the migration history log comprising data about one or more performed migrations of the workload, obtaining an attestation evidence collection associated with the workload, the attestation evidence collection associated with the workload comprising one or more attestation evidence associated with the workload, obtaining a migration image of the workload from the first confidential computing environment, transmitting the migration image, the attestation evidence collection and the migration history log to a second confidential computing environment.

Another example (e.g., example 23) relates to obtaining a first attestation evidence of the workload being executed in the first confidential computing environment and obtaining a second attestation evidence of the second confidential computing environment, and determine if a migration of the workload from the first to the second confidential computing environment is performed based on the first and the second attestation evidence.

Another example (e.g., example 24) relates to a previous example (e.g., example 23) or to any other example, further comprising determining if the migration of the workload is performed by comparing a security level of the first confidential computing environment to a security level of the second confidential computing environment, wherein the first attestation evidence comprises the security level of the first confidential computing environment and the second attestation evidence comprises the security level of the second confidential computing environment.

Another example (e.g., example 25) relates to a previous example (e.g., example 24) or to any other example, further comprising determining that the migration of the workload is performed if a difference between the security level of the first confidential computing environment and the security level of the second confidential computing environment is in a predetermined range.

Another example (e.g., example 26) relates to a previous example (e.g., one of the examples 22 to 25) or to any other example, further comprising determining the security level of the second confidential computing environment and perform the migration of the workload only if the security level is in a predetermined range.

Another example (e.g., example 27) relates to a previous example (e.g., one of the examples 26 or 27) or to any other example, further comprising that the predetermined range is based on migration policy of the workload.

Another example (e.g., example 28) relates to a previous example (e.g., one of the examples 22 to 27) or to any other example, further comprising controlling the second confidential computing environment to install the migration image on second confidential computing environment.

Another example (e.g., example 29) relates to a previous example (e.g., one of the examples 22 to 28) or to any other example, further comprising obtaining a third attestation evidence of the second confidential computing environment, the third attestation evidence is generated after installation of the workload and prior to execution of the workload in the second confidential computing environment.

Another example (e.g., example 30) relates to a previous example (e.g., one of the examples 22 to 29) or to any other example, further comprising that the first confidential computing environment is executing on a first host and the second confidential computing environment is executing on a second host, wherein the first host and the second host are different from each other.

Another example (e.g., example 31) relates to a previous example (e.g., one of the examples 22 to 30) or to any other example, further comprising transferring a first public key from the second confidential computing environment to the first confidential computing environment and transferring an encrypted migration image and an encrypted symmetric key from the first confidential computing environment to the second confidential computing environment.

Another example (e.g., example 32) relates to a previous example (e.g., one of the examples 22 to 31) or to any other example, further comprising transferring a second public key to from the first confidential computing environment to the second confidential computing environment.

Another example (e.g., example 33) relates to a previous example (e.g., one of the examples 22 to 32) or to any other example, further comprising that the migration image comprises at least one of the following the workload, a runtime environment running the workload, supporting resources of the workload, a machine state of a host executing the workload, a workload execution status and a migration policy of the workload.

Another example (e.g., example 34) relates to a previous example (e.g., one of the examples 1 to 12) or to any other example, further comprising receiving a request of the migration of the workload.

An example (e.g., example 35) relates to an apparatus comprising processor circuitry configured to obtain a migration history log from a first confidential computing environment executing a workload, the migration history log comprising data about one or more performed migrations of the workload, obtain an attestation evidence collection associated with the workload, the attestation evidence collection associated with the workload comprising one or more attestation evidence associated with the workload, obtain a migration image of the workload from the first confidential computing environment, transmit at least one of the migration image, the attestation evidence collection and the migration history log to a second confidential computing environment.

An example (e.g., example 36) relates to an apparatus comprising processor circuitry configured to transmit a migration history log to a migration server, the migration history log comprising data about one or more performed migrations of a workload, the workload being executed in a first confidential computing environment, and transmit an attestation evidence collection associated with the workload to the migration server, the attestation evidence collection associated with the workload comprising one or more attestation evidence associated with the workload, generate a migration image of the workload for a migration of the workload from the first confidential computing environment to a second confidential computing environment, and transmit the migration image, the attestation evidence collection and/or the migration history log to the migration server.

An example (e.g., example 37) relates to an apparatus comprising processor circuitry configured to transmit an attestation evidence of a second confidential computing environment to a migration server, the second confidential computing environment being a migration destination for a workload being executed in a first confidential computing environment.

An example (e.g., example 38) relates to a device comprising means for processing for obtaining a migration history log from a first confidential computing environment executing a workload, the migration history log comprising data about one or more performed migrations of the workload, obtaining an attestation evidence collection associated with the workload, the attestation evidence collection associated with the workload comprising one or more attestation evidence associated with the workload, obtaining a migration image of the workload from the first confidential computing environment, transmitting at least one of the migration image, the attestation evidence collection and the migration history log to a second confidential computing environment.

An example (e.g., example 39) relates to a device comprising means for processing for transmitting a migration history log to a migration server, the migration history log comprising data about one or more performed migrations of a workload, the workload being executed in a first confidential computing environment, and transmitting an attestation evidence collection associated with the workload to the migration server, the attestation evidence collection associated with the workload comprising one or more attestation evidence associated with the workload, generating a migration image of the workload for a migration of the workload from the first confidential computing environment to a second confidential computing environment, and transmitting the migration image, the attestation evidence collection and/or the migration history log to the migration server.

An example (e.g., example 40) relates to a device comprising means for processing for transmitting an attestation evidence of a second confidential computing environment to a migration server, the second confidential computing environment being a migration destination for a workload being executed in a first confidential computing environment.

Another example (e.g., example 41) relates to a non-transitory machine-readable storage medium including program code, when executed, to cause a machine to perform the method of any one of examples 22 to 34.

Another example (e.g., example 42) relates to a computer program having a program code for performing the method of any one of examples 22 to 34 when the computer program is executed on a computer, a processor, or a programmable hardware component.

Another example (e.g., example 43) relates to a machine-readable storage including machine readable instructions, when executed, to implement a method or realize an apparatus as claimed in any pending example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus for migrating a workload comprising processing circuitry configured to:
obtain a migration history log from a first confidential computing environment executing a workload, the migration history log comprising data about one or more performed migrations of the workload;
obtain an attestation evidence collection associated with the workload, the attestation evidence collection associated with the workload comprising one or more attestation evidence associated with the workload;
obtain a migration image of the workload from the first confidential computing environment;
transmit at least one of the migration image, the attestation evidence collection and the migration history log to a second confidential computing environment.

2. The apparatus according to claim 1, wherein the processing circuitry is further configured to:
obtain a first attestation evidence of the workload being executed in the first confidential computing environment; and
obtain a second attestation evidence of the second confidential computing environment; and
determine if a migration of the workload from the first to the second confidential computing environment is performed based on the first and the second attestation evidence.

3. The apparatus according to claim 2, wherein the processing circuitry is further configured to determine if the migration of the workload is performed by comparing a security level of the first confidential computing environment to a security level of the second confidential computing environment,
wherein the first attestation evidence comprises the security level of the first confidential computing environment and the second attestation evidence comprises the security level of the second confidential computing environment.

4. The apparatus according to claim 3, wherein the processing circuitry is further configured to determine that the migration of the workload is performed if a difference between the security level of the first confidential computing environment and the security level of the second confidential computing environment is in a predetermined range.

5. The apparatus according to any one of claims 1 to 4, wherein the processing circuitry is further configured to determine the security level of the second confidential computing environment and perform the migration of the workload only if the security level is in a predetermined range.

6. The apparatus according to any one of claims 4 to 5, wherein the predetermined range is based on migration policy of the workload.

7. The apparatus according to any one of claims 1 to 6, wherein the processing circuitry is further configured to obtain a third attestation evidence of the second confidential computing environment, the third attestation evidence is generated after installation of the workload and prior to execution of the workload in the second confidential computing environment.

8. The apparatus according to any one of claims 1 to 7, wherein the migration history log comprises for each of one or more prior performed migrations of the workload at least one of the following: information about a source confidential computing environment and a destination confidential computing environment of the respective migration of the workload, a migration time of the respective migration of the workload, an attestation evidence of the source confidential computing environment before to the respective migration and an attestation evidence of the destination confidential computing environment after to the respective migration of the workload.

9. The apparatus according to any one of claims 1 to 8, wherein the first confidential computing environment is executing on a first host and the second confidential computing environment is executing on a second host, wherein the first host and the second host are different from each other.

10. The apparatus according to any one of claims 1 to 9, wherein the processing circuitry is further configured to:
receive a first public key from the second confidential computing environment; and
encrypt the migration image with a symmetric key by the first confidential computing environment; and
encrypt the symmetric key with the first public key; and
transmit the encrypted migration image and the encrypted symmetric key to the second confidential computing environment.

11. The apparatus according to any one of claims 1 to 10, wherein the processing circuitry is further configured to:
sign the migration image with a second private key; and
transmit the corresponding second public key to the second confidential computing environment.

12. The apparatus according to any one of claims 1 to 11, wherein the migration image comprises at least one of the following: the workload, a runtime environment running the workload, supporting resources of the workload, a machine state of a host executing the workload, a workload execution status and a migration policy of the workload.

13. An apparatus comprising processing circuitry configured to:
transmit a migration history log to a migration server, the migration history log comprising data about one or more performed migrations of a workload, the workload being executed in a first confidential computing environment; and
transmit an attestation evidence collection associated with the workload to the migration server, the attestation evidence collection associated with the workload comprising one or more attestation evidence associated with the workload;
generate a migration image of the workload for a migration of the workload from the first confidential computing environment to a second confidential computing environment; and
transmit the migration image, the attestation evidence collection and/or the migration history log to the migration server.

14. The apparatus according to claim 13, wherein the processing circuitry is further configured to generate an attestation evidence associated with the workload executed in the first confidential computing environment; and
transmit the attestation evidence associated with the workload to the migration server, wherein the attestation evidence comprises a security level of the first confidential computing environment.

15. Method comprising:
obtaining a migration history log from a first confidential computing environment executing a workload, the migration history log comprising data about one or more performed migrations of the workload;
obtaining an attestation evidence collection associated with the workload, the attestation evidence collection associated with the workload comprising one or more attestation evidence associated with the workload;
obtaining a migration image of the workload from the first confidential computing environment;
transmitting the migration image, the attestation evidence collection and the migration history log to a second confidential computing environment.
